# EUROPEAN PATENT APPLICATION

(11) **EP 1 703 589 A1**
(43) Date of publication of application: **20.09.2006**
(21) Application number: 05258004.0
(22) Date of filing: 22.12.2005
(51) Int. Cl.: H01Q 9/28, H01Q 1/22

(54) **Tag antenna**

(30) Priority: 17.10.2005 JP 2005302210; 17.03.2005 JP 2005076492
(71) Applicant: Fujitsu Ltd., Kawasaki-shi, Kanagawa 211-8588 (JP)
(72) Inventor: Kai, Manabu, Fujitsu Limited, Kawasaki-shi Kanagawa 211-8588 (JP); Maniwa, Toru, Fujitsu Limited, Kawasaki-shi Kanagawa 211-8588 (JP); Yamagajo, Takashi, Fujitsu Limited, Kawasaki-shi Kanagawa 211-8588 (JP)
(74) Representative: Stebbing, Timothy Charles

(57) **Abstract**

In an RFID tag antenna, a dipole part of a length shorter than half of an antenna resonance wavelength is arranged in a folded shape with a feeding part (11) at its centre to feed a chip. An inductance part (12) for adjusting the inductance of the antenna is provided so as to sandwich the feeding part (11). The inductance (12) is provided within an empty space enclosed by the folded dipole part. By providing the inductance part (12), the inductance of the antenna can be adjusted so as to resonate at a predetermined frequency with the capacitance of the chip connected to the feeding part (11). Although the radiation resistance of the antenna becomes extremely large according to calculations, it is actually almost the same as the resistance of the chip due to loss, and a substantial fraction of the power received by the antenna can be provided to the chip. Thus, a small-sized and practical antenna can be achieved.

## Description

The present invention is related to a non-contact tag antenna of the kind used by an RFID tag to communicate with an RFID reader/writer.

A system which enables a reader/writer to read information from a tag by transmitting a signal of approximately 1W from the reader/writer, receiving this signal at the tag-end, and returning a response signal to the reader/writer, again, using the UHF band (860 to 960MHz) radio signals, is called an RFID system. Although the communication distance thereof differs according to the tag antenna gain, chip operation voltage, and peripheral environment, a typical range for a passive tag is about 3m. A tag comprises an antenna with a thickness of 10 to 30µm and an LSI chip which is connected to the antenna feed point.

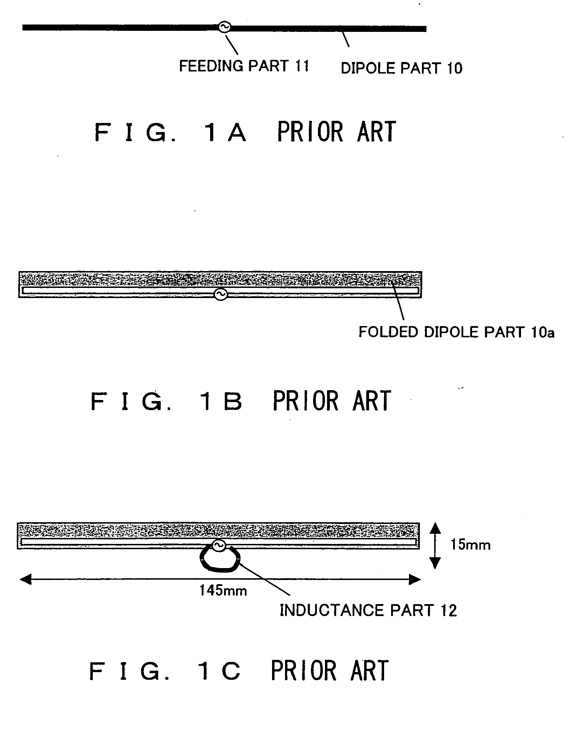

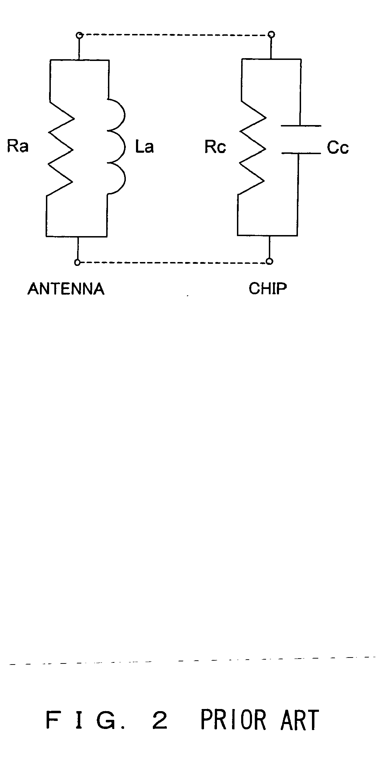

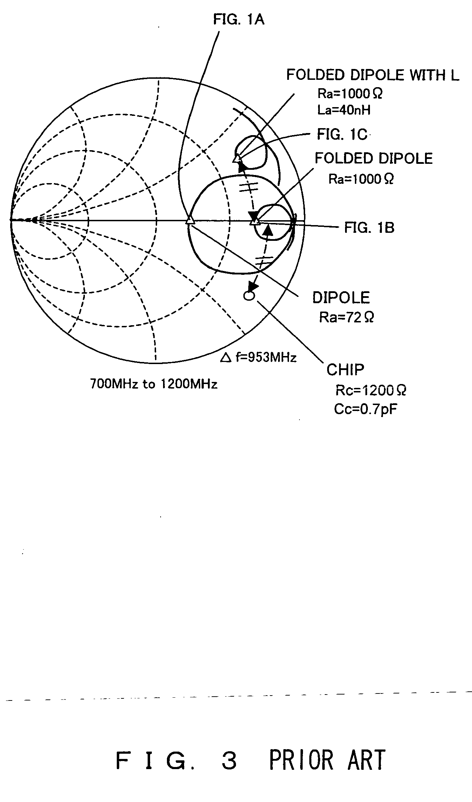

Figs. 1A to 1C are diagrams explaining a tag antenna used in a conventional RFID system. Fig. 2 is a diagram showing an equivalent circuit of an RFID tag antenna. Fig. 3 is a diagram showing an analysis example according to an admittance chart of a conventional tag antenna.

As shown in Fig. 2, the LSI chip can be equivalently represented by the parallel connection of resistance Rc (for example, 1200Ω) and capacitance Cc (for example, 0.7pF). This is shown in the position indicated by a circle in Fig. 3, in the admittance chart. On the other hand, the antenna can be equivalently represented by the parallel connection of resistance Rc (for example, 1000Ω) and inductance (for example, 40nH). By parallel-connecting both LSI chip and antenna, the capacitance and inductance resonate, and as seen from the equation f0=1/ (2π √ (LC)), of the resonant frequency, the antenna and chip can be matched with the desired resonant frequency f0, and the reception power at the antenna is sufficiently supplied to the chip-end.

As a basic antenna used as a tag antenna, a dipole antenna of a total length of 145mm, shown in Fig. 1A, has been proposed. In this antenna, a dipole part 10 is connected to a feeding part 11, electric power is extracted from a signal received by the dipole part 10, the feeding part feeds the chip and transfers the signal per se to the chip, as well. However, as indicated by a triangle in Fig. 3, if f=953MHz, Ra=72Ω and the imaginary part=0. However, because an extremely high value of about 1000Ω is required for the radiation resistance Ra of the RFID tag antenna, Ra must be increased. To achieve this, a folded dipole antenna with a total length of about 145mm, as shown in Fig. 1B, can be implemented and the Ra can be increased to about 300Ω to 1500Ω, depending on line width. Aside from the dipole part 10 in Fig. 1A becoming a folded dipole part 10a, Fig. 1B is the same as Fig. 1A. Fig. 3 shows an example of Ra=1000Ω. Furthermore, as shown in Fig. 1C, by connecting the inductance part 12 in parallel to this folded dipole antenna, the characteristic of the antenna is rotated to the left in the admittance chart and has an imaginary component (Ba=-1/ωLa) of an absolute value which is the same as the chip (Bc=-ωCc). The shorter the inductance length is, the smaller the La value and larger the rotation amount. In this way, the imaginary component Bc of the chip and imaginary component Ba of the antenna are the same magnitude, are cancelled, and resonate.

This imaginary component cancellation is the most important factor in RFID tag antenna design. On the other hand, although it is preferable that the resistance Rc of the chip and the radiation resistance Ra of the antenna match, it is not necessary for these to match exactly, and antenna reception power can be supplied to the chip without any problems if their ratio is about two or less.

The foregoing describes the basic design method for RFID tag antennas, and it is necessary to design the basic antenna such that Ra=1000Ω at the point where the design frequency f=953MHz and the imaginary part=0 and an inductance (Ba=-1 / ωLa; La=40nH) which has the same absolute value as the susceptance (Bc=ωCc; Cc=0.7pF) of the chip is connected in parallel.

Further information is available in the following Non-Patent Reference 1 with regards to dipole antennae:
Non-Patent Reference 1: The Institute of Electronics, Information and Communication Engineers. Antenna Kougaku Handbook (Antenna Engineering Handbook). Ohmsha, Ltd. ISBN 4-274-02677-9

However, because an antenna with a height of about 15mm and width of about 145mm is too large and impractical, miniaturization is necessary. For example, an antenna which has been miniaturized to about a half or a quarter of a credit card size (86mm x 54mm) is more practical. However, when the antenna is miniaturized, resonance conditions do not match with the chip to be resonated therewith because the resonance frequency, which has an imaginary part=0, increases in inverse proportion to the miniaturization of the antenna if the antenna is designed by the foregoing design method.

Consequently, there is a need for a tag antenna which can be miniaturized.

A tag antenna of the present invention is composed of a dipole antenna and a feeding part with a chip mounted thereto, comprising: a dipole part of a length shorter than half of the antenna resonance wavelength; a feeding part provided in the center of the dipole part; and end parts provided with an area larger than the line width of the dipole part, on both ends of the dipole part.

A small antenna which has an antenna length smaller than λ/2 (λ being the antenna resonance wavelength) can be formed, and a communication distance which is 60 to 75% of that of a standard λ/2-length folded antenna can be maintained. In addition, the cost of the antenna can be reduced significantly by removing unnecessary metal components (a reas)

Reference is made by way of example, to the accompanying drawings in which:
Figs. 1A to 1C are diagrams explaining a tag antenna used in a conventional RFID system;
Fig. 2 is a diagram showing an equivalent circuit of the RFID tag antenna;
Fig. 3 is a diagram showing an example of an analysis by the admittance chart of a conventional tag antenna;
Fig. 4 is a diagram (1) explaining a first embodiment of the present invention;
Fig. 5 is a diagram (2) explaining the first embodiment of the present invention;
Fig. 6 is a diagram (3) explaining the first embodiment of the present invention;
Fig. 7 is a diagram (4) explaining the first embodiment of the present invention;
Fig. 8 is a diagram (5) explaining the first embodiment of the present invention;
Fig. 9 is a diagram (6) explaining the first embodiment of the present invention;
Fig. 10 is a diagram (7) explaining the first embodiment of the present invention;
Figs. 11A and 11B are a diagrams (8) explaining the first embodiment of the present invention;
Figs. 12A and 12B are a diagrams (1) explaining a second embodiment of the present invention;
Fig. 13 is a diagram (2) explaining the second embodiment of the present invention;
Fig. 14 is a diagram (3) explaining the second embodiment of the present invention;
Fig. 15 is a diagram (1) explaining a third embodiment of the present invention;
Fig. 16 is a diagram (2) explaining the third embodiment of the present invention;
Fig. 17 is a diagram (3) explaining the third embodiment of the present invention;
Fig. 18 is a diagram (4) explaining the third embodiment of the present invention;
Fig. 19 is a diagram (5) explaining the third embodiment of the present invention;
Fig. 20 is a diagram (6) explaining the third embodiment of the present invention; and

Fig. 21 is a diagram (7) explaining the third embodiment of the present invention.

In an embodiment of the present invention, by connecting an inductor to an RFID tag antenna having an antenna length which is shorter than λ/2, λ being the antenna resonance wavelength, in parallel, the RFID tag antenna can be matched with an LSI chip by rotating the point of a frequency (desired frequency), which is lower than the antenna resonance frequency (frequency higher than the desired frequency) which has an imaginary part=0 on the admittance chart, to the left until a point matching the LSI chip. This antenna length is preferably about 3/8λ to λ/6. In addition, the antenna is preferably folded in such a way as to fold around the inside (i.e. folded inwardly). The antenna length can be maximized within a limited area by forming the inductance in an empty space of the inside (i.e. enclosed by the dipole). The line width of the antenna can be in part widened and the area can be increased. In addition, an appropriate inductance length is selected, taking into consideration the specific dielectric constant and thickness of an object to which the tag is adhered. Also, sections of the antenna part with low current density can be partially removed. A slit-shaped form of removal (aperture) is preferred. In addition, the shape of the antenna part after removal is preferably a triangular or rectangular ring. It is preferable to form the antenna on a sheet (paper, film, PET) with metal, of which the main constituent is Cu, Ag, or A1.

This is under the assumption that the RFID tag antenna will be used in a UHF band. (The purpose of miniaturization is lost if the operating frequency is 2.45GHz.)

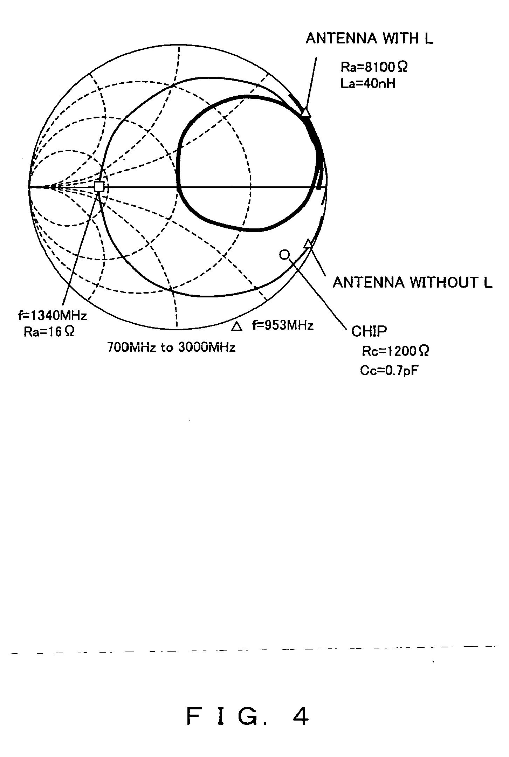

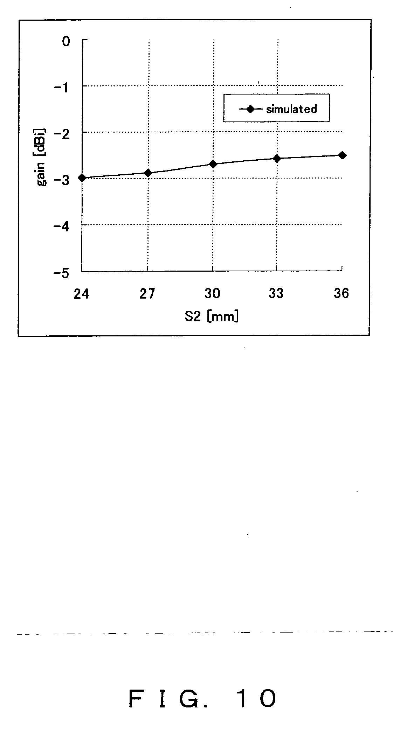

Fig. 4 to Fig. 11 are diagrams explaining a first embodiment of the present invention.

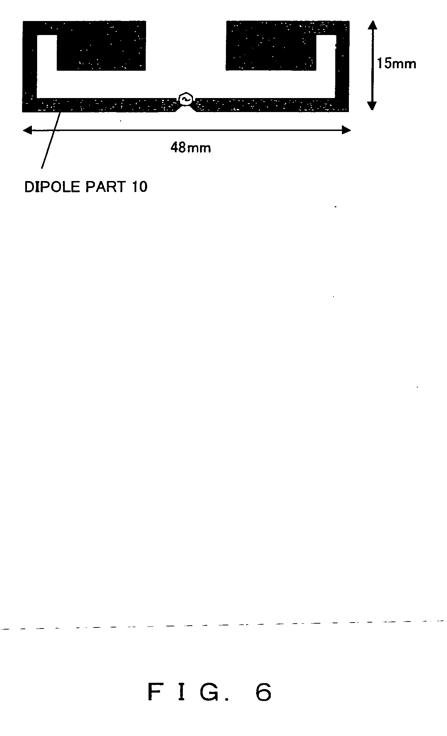

As shown in Fig. 6, a dipole is formed with a height of 15mm x width of 48mm (effective total length, approximately 116mm=3/8λ), under the constraint of an area smaller than 1/4 of a card area (credit card area). The antenna of Fig. 6 has a rolled dipole part 10. Electromagnetic field simulation is performed for this antenna configuration, and when the calculation results of f=700MHz to 3000MHz are plotted on an admittance chart, a locus or trajectory (antenna without L) such as the thin line of Fig. 4 is formed. At the imaginary part=0, f=1340MHz, which is large, and Ra=16Ω, because the RFID tag antenna is miniaturized. Generally, if the dipole is bent, the radiation resistance Ra becomes smaller than the Ra=72Ω of an ordinary straight dipole. In this case, the f=953MHz point is in a position shown by a triangle indicated as an antenna without L in Fig. 4. Then, by connecting an inductance part (S2=30mm) 12 to this dipole in parallel, as shown in Fig. 4, the trajectory on the admittance chart rotates to the left (anticlockwise), as a whole. Thus, the frequency characteristics form a trajectory such as that shown by the bold line (antenna with L) in Fig. 4. At this time, when electromagnetic field simulation is preformed, the f=953MHz point becomes Ra=8100Ω and La=40nH. Although this point matches with regards to the imaginary part (inductance), it is considered that most of the antenna reception power is lost into the air because the antenna radiation resistance Ra=8100Ω is too large for the Rc=1200Ω of the chip causing the fraction reflected to be large.

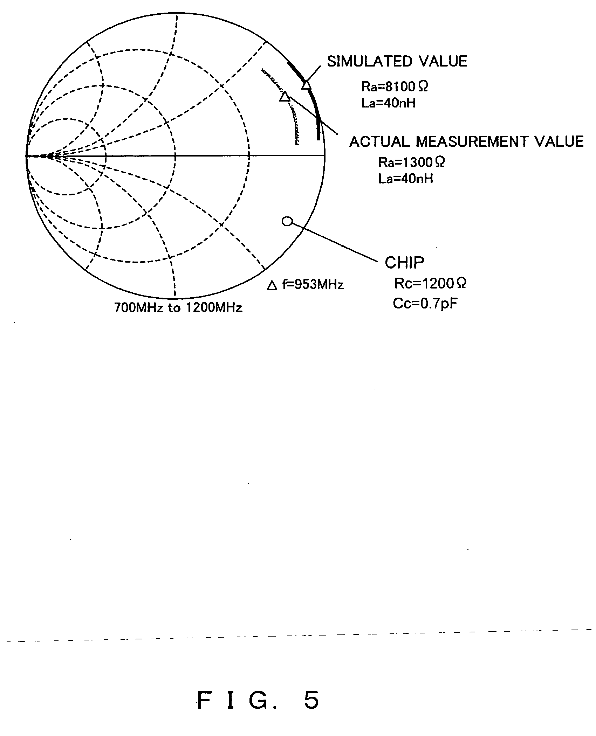

However, when this antenna was produced experimentally (an antenna with a thickness of 35µm was formed of copper) and the admittance measured, the locus of the antenna with L on the admittance chart was discovered to be considerably within the simulated value as viewed on the chart of Fig. 5, because of loss in the conductor. At this time, it is recognized that the measured Ra=1300 Ω and measured La=40nH. In other words, it became clear, empirically that La basically matches with the value of the electromagnetic field simulator, and Ra becomes a value near the Rc=1200Ω of the chip. In this way, it was discovered that the small antenna and chip match and the antenna reception power can be supplied sufficiently to the chip.

Here, because the antenna length 3/8λ of the antenna in the present invention is shorter than the most radiation-efficient λ/2 antenna, the radiation efficiency slightly decreases, and the electromagnetic field simulator calculation value of this antenna is gain=approx. -2.7dBi, to the gain=approx. 2dBi of the λ/2-long folded dipole. As a result of actually producing both antennas experimentally and comparing communication distances, a communication distance which is 60% of the λ/2-long folded dipole was obtained. However, obtaining a communication distance of 60% from a small antenna of 48mm x 15mm is extremely significant for practical purposes.

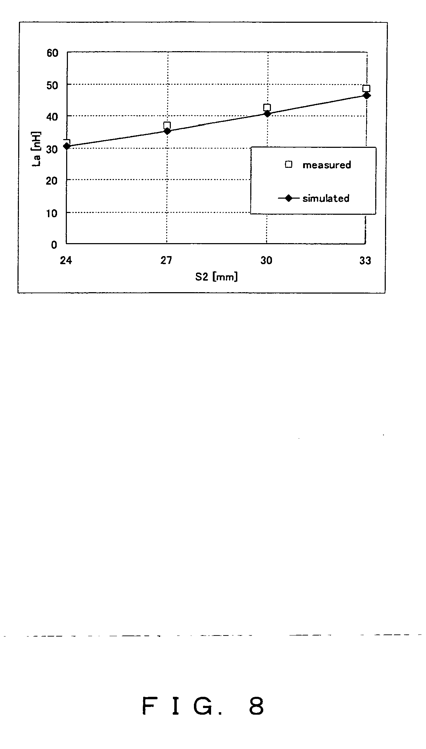

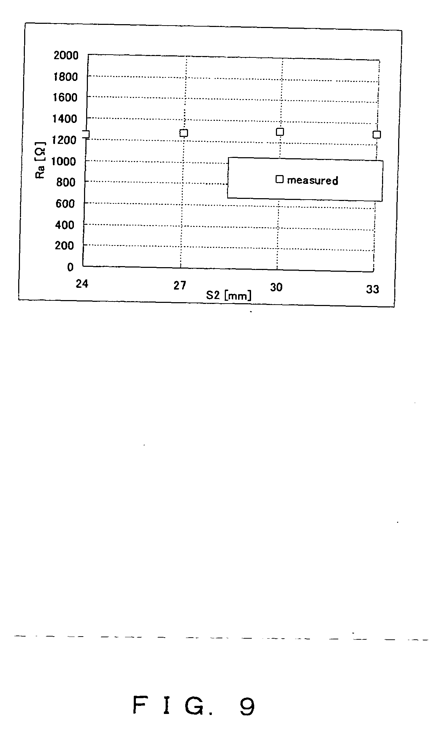

If the inductance length S2 is changed from S2=24mm to 33mm, the actual measurement value of the La value matches well with the simulation value, as shown in Fig. 8, and the actual measurement of Ra is actually an almost constant 1200Ω to 1300Ω, as shown in Fig. 9. In addition, it is known that the gain value is about -3 to -2.5dBi at simulation value. Therefore, from these facts, when the Cc values differ according to the type of chip, if the S2 value is selected appropriately according to the value, an La which matches Cc can be obtained, as well as an appropriate Ra, and an antenna which has a practical gain can be manufactured.

In summary of the foregoing, an imaginary component is canceled by connecting in parallel the inductance La to a small antenna of less than λ/2 in length, and giving the length S2 of this inductance an appropriate length S2 such as to resonate according to the Cc value of the chip. On the other hand, the antenna radiation resistance Ra can match well with the chip because it is a value very close to the chip resistance Rc due to conductor loss of the antenna. It is presumed that the antenna radiation resistance Ra is too large and does not match with the chip, if determination is made only from the electromagnetic simulation result, and thus, the present antenna design method has not been considered up to now. However, the present manufacturing method was invented based on the empiric data obtained from numerous experimental production results. Here, it is important in the present manufacturing method that Rc of the chip is large, 1000Ω to 2000Ω. The chip used in the RFID tag is chosen to have a large resistance Rc in order to obtain the operating voltage of the chip, because drive power is also extracted from the received radiation field. If the resistance Rc of the chip is small, it is thought that the antenna radiation resistance Ra will not assume a value which generates resonance and which matches the resistance Rc of the chip due to the conductor loss of the antenna alone.

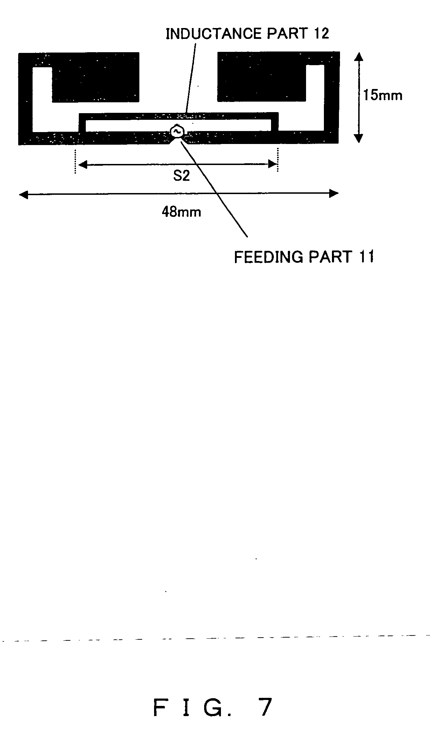

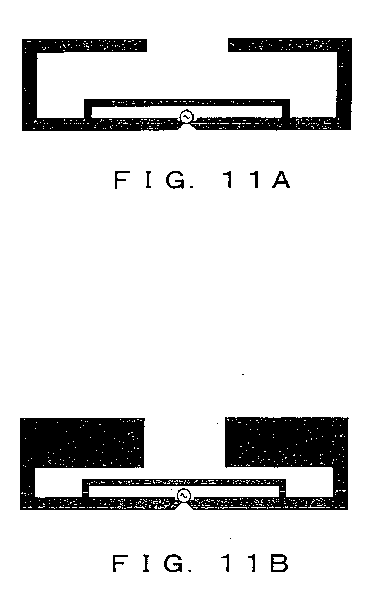

In addition, the shape of the dipole is not limited to the foregoing and a dipole shape within 15mm in height and 48mm in width, as shown in Fig. 11A and Fig. 11B, can be considered. However, in these cases, the gains are -3.6dBi and -3.0dBi, respectively, and it is clear that the antenna in Fig. 7 has a slightly higher gain.

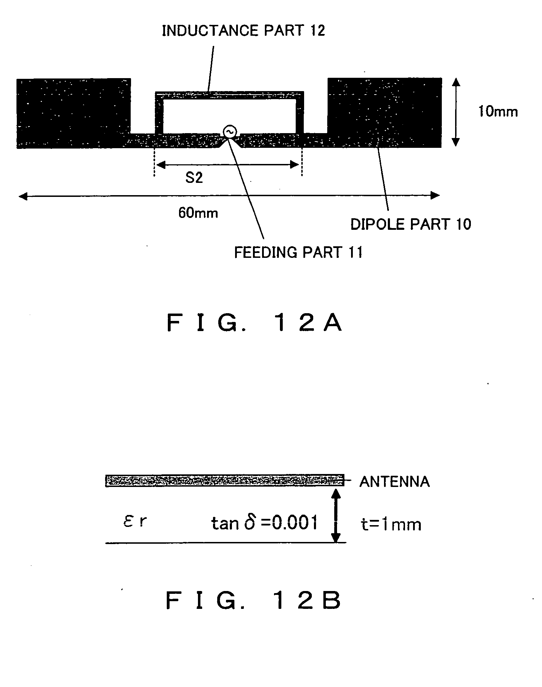

Fig. 12A to Fig. 14 are diagrams explaining a second embodiment of the present invention.

In RFID, the tag antenna may be used by adhering it to a target object, e.g. for tracking the object. In this case, the most suitable inductance must be selected very carefully because the resonance wavelengths change due to the specific dielectric constant (Er) of the object to which it is adhered.

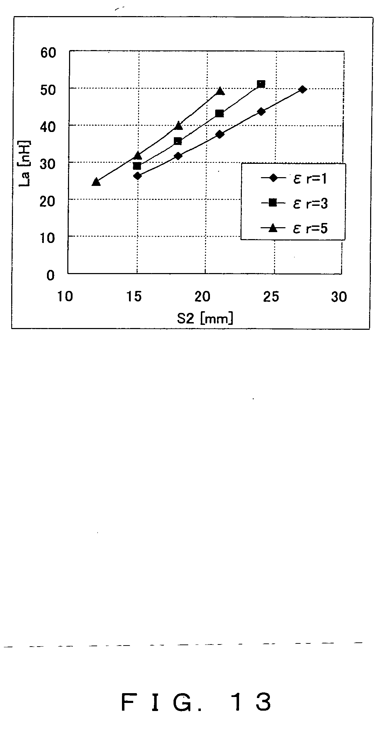

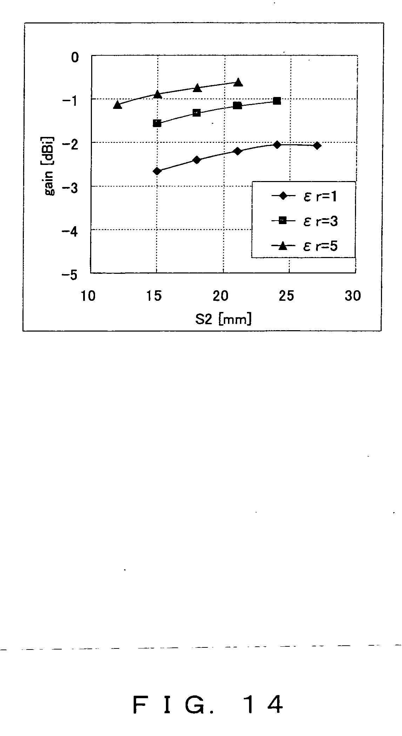

As shown in Fig. 12A, the dipole was formed with a height of 10mm and a width of 60mm (effective total length, approximately 75mm=λ/4) and designed using electromagnetic simulation and experimental product measurements with the same considerations as the first embodiment. The thickness of the object to which the antenna is adhered is assumed to be t=1 mm and the specific dielectric constant to be εr=1, 3, or 5 (air is εr=1, plastic is εr=3 to 4, and rubber is εr=4 to 5). As a result, the inductance La of the antenna to the inductance length S2 is the value shown in Fig. 13. Because it is known from the first embodiment that the actual measurement and the simulation value for inductance almost match, this simulation value is reliable. In addition, from the results of the experimental production of the antenna, the antenna radiation resistance is Ra=1270Ω regardless of the S2 value. In addition, the simulation value of the gain is the value shown in Fig. 14. Here, the larger εr is, the larger the gain is, because the larger εr is, the shorter the wavelength becomes, and the antenna length seen from the shortened wavelength looks longer and is closer to the length of λ/2, which has high radiation-efficiency. However, the calculation here is made under the assumption that the dielectric loss of the dielectric constant is Tanδ=0.001, and therefore, the dielectric constant has almost no influence on antenna gain. However if the dielectric loss is great, the gain may fall.

In order for the inductance value La of the antenna to become 40nH which matches with a Cc=0.7pF chip from Fig. 13, S2=22mm is selected from a curve of εr=1 if the antenna is used alone, or in other words, when the antenna is not adhered anywhere. If the antenna is adhered to an object with a thickness of 1mm and Er=3, S2=20mm should be selected, and if the antenna is adhered to an object with a thickness of 1mm and εr=5, S2=18mm.

As a result of actually experimentally producing an antenna with S2=20mm, adhering it to a plastic object with a thickness of 1mm, and measuring the communication distance, a communication distance which is 65% of the λ/2 folded dipole is obtained. Although the communication distance has become shorter, a communication distance of 65% from a small antenna of 10mm x 60mm is extremely practical.

Although an instance wherein one surface of the antenna is adhered is assumed in the present invention, for example, the antenna may be coated in resin or the like. In such a case dielectric material will exist on both surfaces of the antenna, and therefore, antenna design by the same method is possible if La value versus S2 value data is obtained by an electromagnetic simulator under the assumption that there are dielectric materials on both surfaces of the antenna, as in the present embodiment. In addition, although the thickness is assumed to be 1mm, even if the thickness is thicked than that assumed, it is enough to perform calculation using the electromagnetic simulator by considering the thickness.

In addition, the shape of the antenna used in the present embodiment can be shaped like the antenna of the first embodiment, shown in Fig. 7 and Fig. 11.

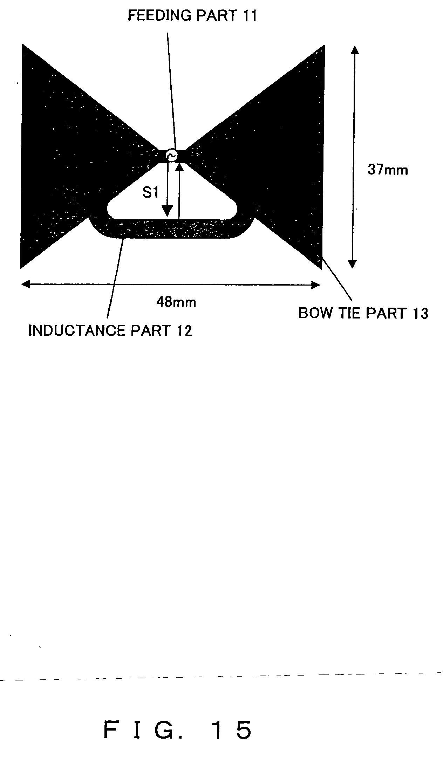

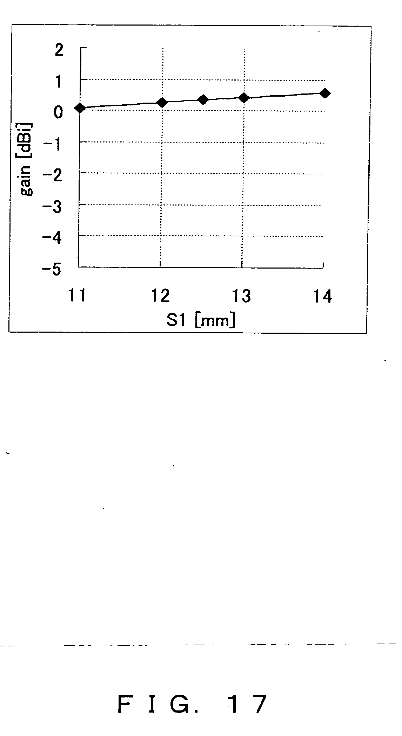

Fig. 15 to Fig. 21 are diagrams explaining a third embodiment of the present invention.

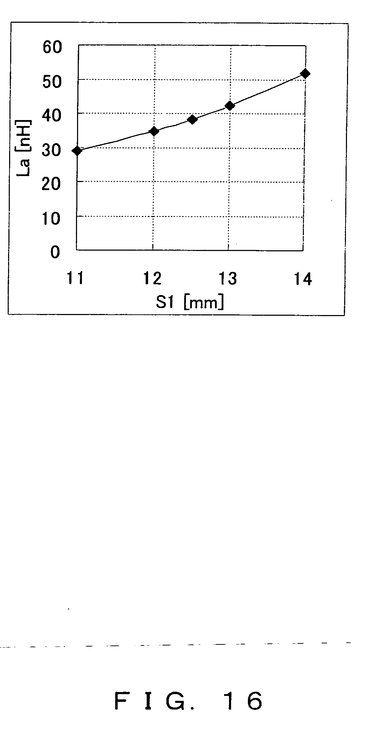

As shown in Fig. 15, under the assumption that the size is half a credit card size, a bow-tie-shaped dipole (Bow Tie part 13) was formed with a height of 37mm and a width of 48mm (effective total length, approximately 110mm=3/8λ) and designed using electromagnetic simulation and experimental product measurements with the same considerations as the first embodiment. As a result, the La value became that shown in Fig. 16 as a function of the inductance length S1. Because it is known from the first embodiment that the actual measurement and the simulation value for inductance almost match, this simulation value is reliable. In addition, from the results of the experimental production of the antenna, the antenna radiation resistance is Ra=1150Ω regardless of the S1 value. Further, the simulation value of the gain is the value shown in Fig. 14. Because the area of the dipole part is larger than that of the antennas shown in the first and second embodiments, gain is increased.

In order for La=40nH to be realized, S1=12. 7mm is selected from Fig. 16.

As a result of actually experimentally producing an antenna with S1=12 . 7mm and measuring the communication distance, a communication distance which is 75% of the λ/2 folded dipole is obtained. Although the communication distance is reduced, a communication distance of 75% from a small antenna of 37mm x 48mm is extremely practical.

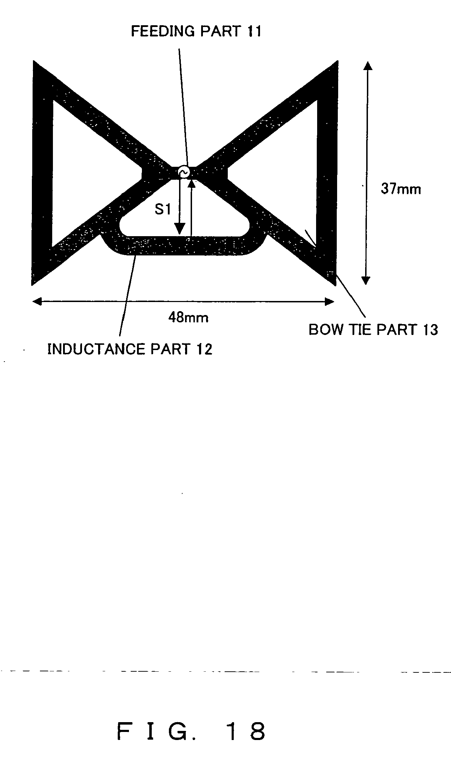

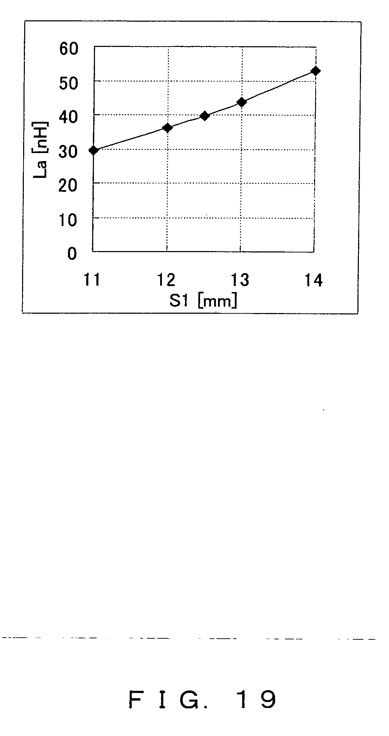

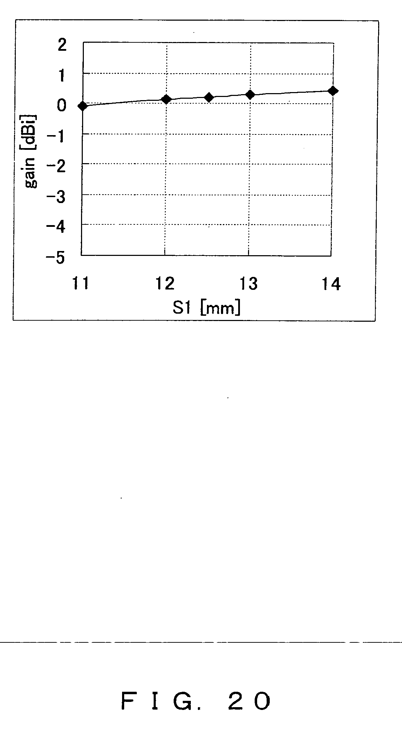

Here, there is a method for printing on a film or the like with conductive ink, to which an Ag paste is combined, when forming an antenna. In this case, if the amount of Ag paste is large, the cost of one antenna becomes high. Thus, forming the antenna by cutting out (or omitting) a section of the antenna in which little current flows, as shown by Fig. 18, is possible. Thus, the Bow Tie part 13 has apertures as shown in Fig. 18. Generally, because high-frequency current is concentrated at the edge parts of the conductor, antenna characteristics are affected little even if no metal is present near the center when the metal area is large. In particular, this is extremely effective with a Bow Tie-shaped antenna such as this, which has a large metal area. As in the foregoing, the La value and gain are determined, as shown in Fig. 19 and Fig. 20. Because sufficient amounts of the metal parts of the inductor remain, an La value of almost the same value as the antenna in Fig. 15, before being cut into triangles can be obtained. The gain value is not a problem because it only decreases by about 0.2dB. In this triangular shape, the area of the metal section is reduced from 920 [mm²] to 540 [mm²], and antenna characteristics almost the same as those of the original can be maintained, even if the amount of conductive ink is reduced significantly.

As a result of actually experimentally producing an antenna with S2=12.5mm and measuring the communication distance, a communication distance which is 70% of the λ/2 folded dipole is obtained. Although the communication distance is reduced, a communication distance of 70% from a small antenna of 37mm x 48mm is extremely practical.

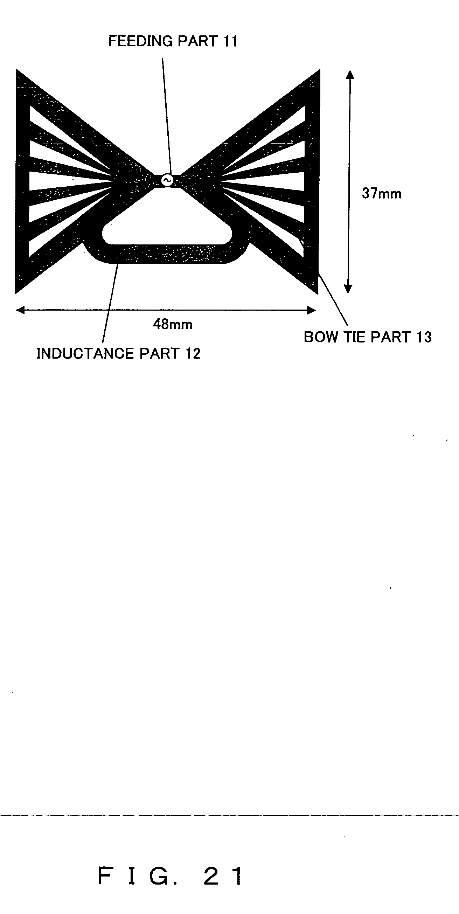

In addition, although the metal section is formed into triangular rings in the present embodiment, it can be patterned into slits, as in Fig. 21. In Fig. 21, a method wherein gain is secured by perforating the Bow Tie part 13 with slits is used, rather than completely removing sections.

Furthermore, the technique of omitting portions in which current is not concentrated is also effective for antennas such as those in Fig. 7 and Fig. 12A. In addition, beyond antennas shaped such as those shown in the present embodiment, omitting sections in which current is not concentrated can be extremely effective.

In a manufacturing method wherein conductive ink is printed onto a film, an antenna is formed on a sheet (paper, film, or PET) with metal, of which the main constituent is Cu, Ag, or Al. Refer to U.S. Patent No. 6,259,408, with regards to details of the manufacturing method.

## Claims

1. A tag antenna composed of a dipole antenna and a feeding part with a chip mounted thereto, comprising:
a dipole part of a length shorter than half of an antenna resonance wavelength;
a feeding part provided in the center of said dipole part; and
end parts provided with an area larger than the line width of said dipole part, on both ends thereof.

2. A tag antenna composed of a dipole antenna and a feeding part with a chip mounted thereto, comprising:
a dipole part of a length shorter than half of an antenna resonance wavelength;
a feeding part provided in the center of said dipole part;
an inductance part formed such as to surround said feeding part with said feeding part in the center and such that both ends are connected to said dipole part; and
end parts provided with an area larger than the line width of said dipole part, on both ends thereof.

3. The tag antenna according to one of claims 1 and 2,
wherein:
both ends of said dipole part are folded.

4. The tag antenna according to one of claims 1 and 2,
wherein:
both ends of said dipole part are folded towards each other.

5. The tag antenna according to one of claims 1 and 2,
wherein:
said dipole part is shaped like the wings of a butterfly.

6. A tag antenna which is connected to a chip and supplies signals to said chip, comprising:
a dipole part of a length shorter than half of an antenna resonance wavelength; and
an inductance part having a length which adjusts the admittance of said tag antenna such that an imaginary part of the admittance of said tag antenna has the same absolute value as the imaginary part of the admittance of said chip, in the dipole part;
wherein the radiation resistance of said dipole part becomes almost the same as the resistance of said chip due to loss, in said dipole part.

7. The tag antenna according claim 6, wherein:
said dipole part is formed by folding in on itself.

8. The tag antenna according to claim 7, wherein:
said inductance part is formed in an empty space enclosed by said dipole part.

9. The tag antenna according to claim 8, wherein:
the length of said dipole part is longer than the inductance part.

10. The tag antenna according to claim 6, 7, 8 or 9, wherein:
the length of said inductance part is determined according to the specific dielectric constant and thickness of the object to which said tag antenna is adhered.

11. The tag antenna according to claim 6, 7, 8 or 9, wherein:
the line width of said dipole part is widened along part of its length.

12. The tag antenna according to claim 11, wherein:
said dipole part is formed such that one or more areas thereof which if present, would have a low current density, are omitted.

13. The tag antenna according to claim 12, wherein:
said dipole part is formed with slits as said areas.

14. The tag antenna according to claim 2 or any of claims 6 to 13, wherein:
said dipole part and said inductance part are formed by printing a liquid including metal, of which the main constituent is copper, silver, or aluminum, on a sheet composed of paper, film, or PET.
